# EUROPEAN PATENT APPLICATION

(11) **EP 3 895 519 A1**
(43) Date of publication of application: **20.10.2021**
(21) Application number: 21168080.6
(22) Date of filing: 13.04.2021
(51) Int. Cl.: A01D 45/00, A01G 13/02

(54) **COVER FOIL PICK-UP AND RELEASE SYSTEM**

(30) Priority: 14.04.2020 NL 2025342
(71) Applicant: Avl Motion, 5843 AT Westerbeek (NL)
(72) Inventor: Van LANKVELD, Arno Henricus Wilhelmus, 5843 AT Westerbeek (NL)
(74) Representative: Vogels, Leonard Johan Paul

(57) **Abstract**

The present invention is in the field of a cover foil pick-up and release system (100) which may be used in a machine for harvesting vegetables and the like, such as harvesting of asparagus and similar plants, especially Asparagaceae species in general, such as the genus of Asparagus, such as Asparagus officinalis, such as the genus of Omithogalum, such as Ornithogalum pyrenaicum, and Cichorioideae species, such as Tragopogon, and Scorconera.

A front guider (10) is adapted to provide a non-spread foil to a hollow system (20), for passing at least one non-spread foil through, the hollow system comprising at a front side thereof an uptake supporting element (21) with a foil friction provider, optionally at a back side thereof a release supporting element (22), and at least one spread-out element (30) over which the at least one a non-spread foil is spread-out preferably to its initial width.

## Description

### FIELD OF THE INVENTION

The present invention is in the field of a cover foil pick-up and release system which may be used in a machine for harvesting vegetables and the like, such as harvesting of asparagus and similar plants, especially Asparagaceae species in general, such as the genus of Asparagus, such as Asparagus officinalis, such as the genus of Omithogalum, such as Ornithogalum pyrenaicum, and Cichorioideae species, such as Tragopogon, and Scorconera.

### BACKGROUND OF THE INVENTION

Asparagus is very popular in certain countries and is often green, though also large quantities of white asparagus are harvested. Asparagus is produced in large quantities in China (>90%), Peru, Mexico, the USA, and the EU, especially Germany, the Netherlands, and the UK. White asparagus are cultivated by covering shoots with soil as they grow, i.e. earthed up. Freshness is considered very important and hence asparagus is typically consumed within a few days after harvesting or processed for storage. Lower ends of white asparagus are peeled before cooking or raw consumption. Asparagus is in Europe a seasonal dish, available from April to the end of June. Outside Europe Aspargus can be harvest a year-round.When grown in tunnels the growth season can be increased significantly from February to November.

In the field asparagus beds are typically covered with a foil, and often with two foils. A first foil, typically a black or white polymeric foil, is provided directly on the asparagus beds. In addition, a second polymeric foil may be provided. In order to form a tunnel in line with the asparagus bed, which may be regarded as a mini greenhouse, also at least one support is provided, typically an inverted u-shaped (∩) support, over which the second foil is provided. Foils are typically provided over part of a bed length, and often over a full length thereof. When harvesting the one or two foils are lifted up, or put aside, in order to provide access to the asparagus beds. After harvesting the one or two foils are put back in their former position. There are machines available for achieving such, but these machines are difficult to combine with an automated asparagus harvesting machine.

Prior art foil pickup systems are still relatively labour intensive. It is considered that too much time and effort is needed to pass at least one foil through a pickup system.

Asparagus is typically harvested manually, which is therefore labour intensive. Each individual asparagus needs to be located in the field, and then be cut manually under the soil at a dedicated length. Previously attempts have been made to make asparagus harvesting machines, but these machines are unreliable, too expensive, not cost effective, can not compensate for variations in the field, such as location, depth, space in between individual asparagus, etc., and may cause damage to the asparagus plant and to the harvested asparagus. Recently the present inventor developed a working machine which is recited in WO 2019/098827 A2 of the present inventor. However, such machines can not be used in beds covered with foil.

Some documents refer to foil-pick up systems. DE10 2015 220480 A1 recites an agricultural vehicle, with a vehicle front part and with a vehicle rear part, between which a working space for at least one self-propelled user is formed, wherein at least one of the vehicle parts has a drive device for driving the vehicle. It is provided that at least one of the vehicle parts has a sensor device which faces the working space and is designed to detect a distance between the vehicle part and a user located in the working space in a contactless manner, and a control unit which controls the drive device as a function of the detected distance. FR 2 735 654 A1 recites an agricultural machine, for lifting plastic film, used for mulching. The machine consists of a rolling base, trailed behind a tractor, and which carries a series of devices, which act in sequence relevant to the direction of travel of the machine. First the device of unearthing (the edges of the plastics film). Secondly, the rolling axle to ensure the transport of the machine. Thirdly, the primary extraction station, with rotary drive to extract the plastic film and this is followed by the second extraction station, designed to enrol the film on to the roll. The final section is bent towards the front of the machine and downwards to ensure that the teeth engage the film under the ground. NL 9 400 324 A recites a portable or otherwise movable device provided with a pick- up element which supports the netting over its entire width, followed by a further support element which is arranged downstream and the width of which is considerably shorter, which further support element is preferably arranged centrally with respect to the abovementioned support element, so that the netting moving from the relatively wide pick-up which completely or substantially completely supports the netting moves onwards with the side parts hanging freely downwards and only the central part supported on the following support element. US 3 701 241 A recites a method of producing and harvesting white asparagus spears along a ridged crop row wherein the asparagus plants are growing, and from which row the asparagus spears emerge and there above grow to harvest maturity; the method including essentially the step of shielding the crop row against access of sunlight to said emerging and growing spears whereby, in darkness, they remain white. And EP 2 710 882 A1 recites a device for lifting a foil element and a further foil element placed on/near an asparagus bed from said asparagus bed and for carrying back the foil element and the further foil element to the asparagus bed, the device comprising a frame movable in the longitudinal direction of the bed, as well as carrying means connected to the frame for holding the foil element and the further foil element spaced from the bed, wherein the device comprises a foil laying element for giving the foil element essentially the shape of the contour of the bed when the foil element is being carried back to the bed, wherein the device is provided with foil separating means.

The present invention therefore relates to a cover foil pick-up and release system, which solves one or more of the above problems and drawbacks of the prior art, providing reliable results, without jeopardizing functionality and advantages.

### SUMMARY OF THE INVENTION

It is an object of the invention to overcome one or more limitations of the cover foil pick-up and release systems of the prior art and to improve these, and in addition to integrate such a system in for example a harvesting machine. An example of such a machine is recited in WO 2019/098827 A2 of the present inventor, which document and its contents are incorporated by reference. The present cover foil pick-up and release system 100 comprises optionally a front guider 10, a hollow system 20, such as a tubular system, a concave system, a U-shaped system, for passing at least one foil through, wherein the hollow system may comprise more than one passage, such as 2-3 passages, such as tubes, wherein initially the at least one foil is typically manually introduced through the front guider into the hollow system, the hollow system comprising at a front side thereof an uptake supporting element 21 for receiving the at least one foil, at a back side thereof optionally an release supporting element 22, and at least one spread-out element 30 over which the at least one foil is spread-out to its initial width. The present cover foil pick-up and release system 100 is **characterized in that** uptake supporting element (21) comprises foil friction providers, such as at each side of the hollow system a wheel (23a,b), wherein wheels (23a,b) are adapted to provide friction to the at least one foil and therewith strain the at least one foil, and/or **characterized in that** uptake supporting element (21) comprises at least one conveyor belt adapted to provide friction to the at least one foil and therewith strain the at least one foil; in case of a conveyor belt the uptake support element may extend partly or fully through tubular system 20, such as running from a begin to the end of said tubular system. The present cover foil pick-up may be integrated in a harvesting machine. Therewith an easy to use system, requiring not much effort/labour and not much time, which removes the at least one foil from a bed and returns it to said bed after harvesting is provided. The system has as a further advantage that the at least one foil is moved out of a way of the asparagus bed before harvesting manually, or before harvesting by a machine, or the like, and that it can pick-up the at least one foil in a reliable and controlled manner. In addition, it at least one foil is returned to the bed in an orderly fashion, covering the beds as intended. The present tubular system 20 may have any cross-section suitable for passing a foil through, such as circular, square, hexagonal, etc. The present cover foil pick-up and release system may be foldable, such that transport is made more easy.

The trajectory of the picked up at least one foil is preferably kept as close as possible to the asparagus bed. Therewith the at least one foil is not stretched too much.

As mentioned above, the present system can also be used without a harvesting machine, by example as a part of a harvesting support device to also be placed nearby the asparagus bed.

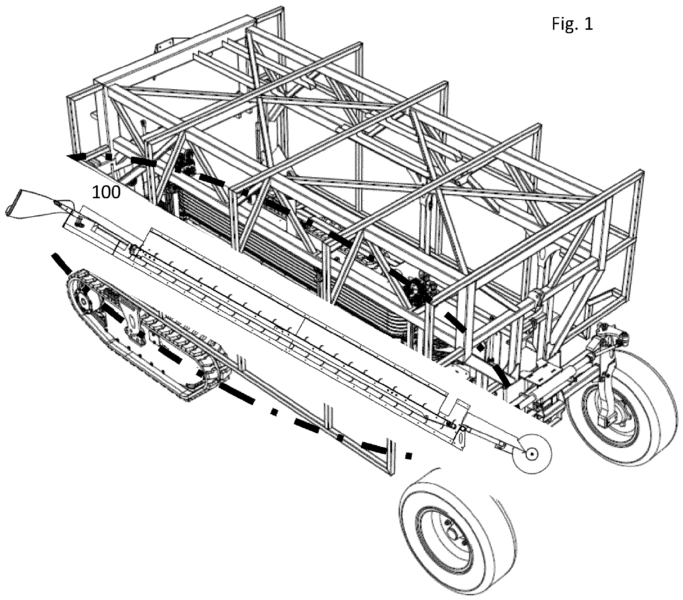

In a second aspect the present invention relates to a harvesting machine comprising at least one cover foil pick-up and release system according to the invention. The system is typically provided at a side of the harvesting machine, e.g. a middle side, such that it does not occupy too much space, it is out of the way of the harvesting parts of the harvesting machine, and it does not hinder the harvesting machine, such that the harvesting machine can still harvest under maximum speed, if required. So the present system can either be provided underneath a harvesting machine, or at a side thereof. In both cases it is inevitable that the longitudinal axis of the present system is oriented parallel to that of the harvesting machine, and thus parallel to an earth dam underneath the harvesting machine. Figure 1 schematically shows the present cover foil pick-up and release system at a right side of the harvesting machine (left for a viewer).

Advantages of the present description are detailed throughout the description.

### DETAILED DESCRIPTION OF THE INVENTION

In an exemplary embodiment the present cover foil pick-up and release system may be **characterized in that** the tubular system at a front side thereof comprises a tapered opening, preferably a tapered opening with outward curved sides.

In an exemplary embodiment of the present cover foil pick-up and release system wherein wheels (23a,b) may comprise a slipper clutch.

In an exemplary embodiment the present cover foil pick-up and release system may be **characterized in** a controller for controlling a rotational speed of wheels (23a,b), preferably for controlling said rotational speed to a value above a speed of the system (100) such that the at least one foil remains strained.

In an exemplary embodiment the present cover foil pick-up and release system may be **characterized in** that the spread-out element (30) comprises two sub-spreaders (31,32), each sub-spreaders (31,32) for spreading-out an individual foil.

In an exemplary embodiment the present cover foil pick-up and release system may be **characterized in that** the spread-out element (30) comprises at least one reversed U-shaped profile (∩).

In an exemplary embodiment the present cover foil pick-up and release system may be **characterized in that** at least one rod for introducing in the at least one foil, wherein the at least one rod is adapted to support transport of the at least one foil.

In an exemplary embodiment the present harvesting machine may be selected from harvesting machines, such as for harvesting vegetables provided in rows, such as asparagus.

In an exemplary embodiment of the present harvesting machine the cover foil pick-up and release system may be provided at a side thereof, or underneath thereof.

In an exemplary embodiment the present harvesting machine the cover foil pick-up and release system may be provided at a height of 100-180 cm, preferably 120-160 cm, such as 140-160 cm.

The invention will hereafter be further elucidated through the following examples which are exemplary and explanatory of nature and are not intended to be considered limiting of the invention. To the person skilled in the art it may be clear that many variants, being obvious or not, may be conceivable falling within the scope of protection, defined by the present claims.

### SUMMARY OF THE FIGURES

Figures 1-2 and 3a-d show certain aspects of the present cover foil pick-up and release system.

### DETAILED DESCRIPTION OF FIGURES

In the figures:
- 100: Cover foil pick-up and release system
- 10: front guider
- 11: motor
- 20: tubular system
- 21: uptake supporting element
- 22: release supporting element
- 23a: wheel
- 23b: wheel
- 24: tapered opening
- 25: conveyor belt
- 30: spread-out element
- 31: sub-spreader
- 32: sub-spreader
- 41: first foil
- 42: second foil

Figure 1 shows a schematic example of an asparagus harvesting machine with the present Cover foil pick-up and release system 100 mounted at a side of the machine.

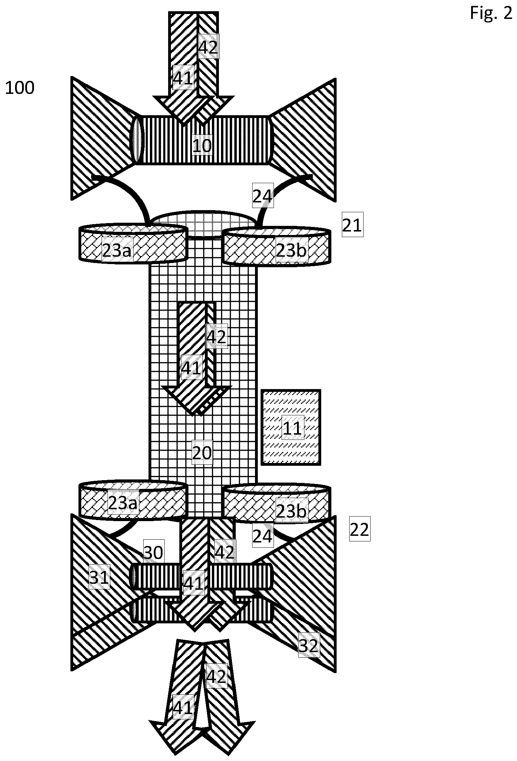

Figure 2 shows schematics of the present Cover foil pick-up and release system 100. Two foils 41,42 are entered over front guider 10, which typically comprises a rotating axis in the middle thereof, into tube 20. Guiders 21 are provided to assist entrance of the foils into the tube 20. Wheels 23a and 23b provide a force onto the foils such that these are guided through the tube. Typically, the wheels are provided with a slip clutch or the like. A motor 11 is shown schematically for driving the wheels. At the exit of the tube guiders 22 are provided. The guiders 21 and 22 may be in the form of a closed spherical part. Then the foils are split again over spread-out element 30 having two sub-spreaders 31 and 32, one for each foil. Thereafter the foils are returned to the asparagus beds.

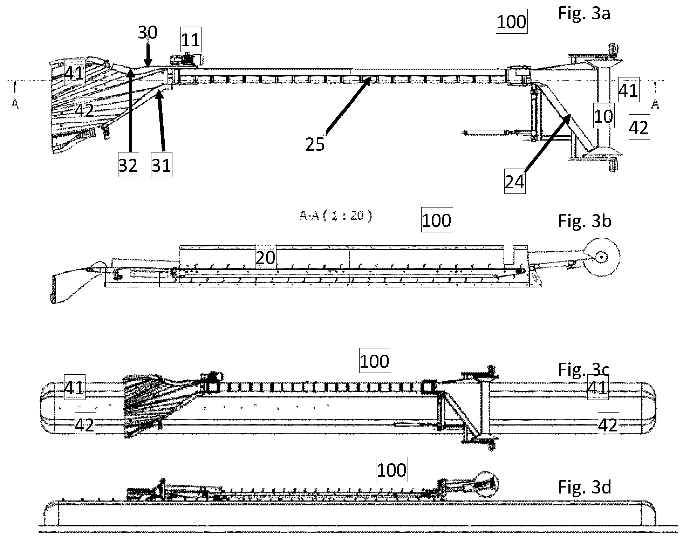

Figure 3a shows an exemplary embodiment of system 100. Two foils 41,42 are entered over front guider 10, which typically comprises a rotating axis in the middle thereof, into tube 20. Conveyor belt 25 is provided to assist entrance of the foils into and transport through the tube 20 (not shown in fig. 3a), such that these are guided through the tube. A motor 11 is shown schematically for driving the conveyor belt. At the exit the foils are split again over spread-out element 30 having two sub-spreaders 31 and 32, one for each foil. Thereafter the foils are returned to the asparagus beds. Fig. 3b shows a side view including tube 20, whereas figs. 3c-d show uptake of foils 41,42 from a asparagus bed, and return thereof (top view and side view).

## Claims

1. Cover foil pick-up and release system (100) comprising
optionally a front guider (10), the front guider adapted to provide a non-spread foil to
a hollow system (20), for passing at least one non-spread foil through, the hollow system comprising at a front side thereof an uptake supporting element (21), optionally at a back side thereof a release supporting element (22), and
at least one spread-out element (30) over which the at least one a non-spread foil is spread-out preferably to its initial width,
**characterized in that** uptake supporting element (21) comprises a foil friction provider.

2. Cover foil pick-up and release system according to claim 1, wherein the hollow system is a tubular system, **characterized in that** the tubular system at a front side thereof comprises a tapered opening (24), preferably a tapered opening with outward curved sides.

3. Cover foil pick-up and release system according to claim 1 or 2, comprising at each side of the hollow system a wheel (23a,b), wherein wheels (23a,b) are adapted to provide friction to the at least one foil and therewith strain the at least one foil.

4. Cover foil pick-up and release system according to any of claims 1-3, wherein uptake supporting element (21) comprises at least one conveyor belt (25) adapted to provide friction to the at least one foil and therewith strain the at least one foil.

5. Cover foil pick-up and release system according to any of claims 1-4, wherein wheels (23a,b) comprise a slipper clutch.

6. Cover foil pick-up and release system according to claim 5, **characterized in** a controller for controlling a rotational speed of wheels (23a,b), preferably for controlling said rotational speed to a value above a speed of the system (100) such that the at least one foil remains strained.

7. Cover foil pick-up and release system according to any of claims 1-6, **characterized in that** the spread-out element (30) comprises two sub-spreaders (31,32), each sub-spreaders (31,32) for spreading-out an individual foil.

8. Cover foil pick-up and release system according to any of claims 1-7, **characterized in that** the spread-out element (30) comprises at least one reversed U-shaped profile (∩).

9. Cover foil pick-up and release system according to any of claims 1-8, **characterized in that** at least one rod for introducing in the at least one foil, wherein the at least one rod is adapted to support transport of the at least one foil.

10. Harvesting machine comprising at least one cover foil pick-up and release system according to any of claims 1-9.

11. Harvesting machine according to claim 10, wherein the machine is selected from harvesting machines, such as for harvesting vegetables provided in rows, such as for asparagus.

12. Harvesting machine according to claim 11, wherein the cover foil pick-up and release system is provided at a side thereof, or underneath thereof.

13. Harvesting machine according to claim 11 or 12, wherein the cover foil pick-up and release system is provided at a height of 100-180 cm, preferably 120-160 cm, such as 140-160 cm.
